# DEMANDE DE BREVET EUROPEEN

(11) **EP 3 588 754 A1**
(43) Date de publication de la demande: **01.01.2020**
(21) Numéro de dépôt: 19180205.7
(22) Date de dépôt: 14.06.2019
(51) Int. Cl.: H02K 49/02, H02K 21/14

(54) **ENSEMBLE RALENTISSEUR ÉLECTROMAGNETIQUE ET GÉNÉRATRICE AINSI QUE VÉHICULE COMPORTANT UN TEL ENSEMBLE**

(30) Priorité: 28.06.2018 FR 1855848
(71) Demandeur: Telma, 95310 Saint-Ouen L'Aumône (FR)
(72) Inventeur: BERNICOT, Marie-Pierre, 78300 POISSY (FR); AKAFOU, Mbarek, 78130 LES MUREAUX (FR); LOUNIS, Rafik, 95800 CERGY (FR); QUENNET, Nicolas, 95240 CORMEILLES EN PARISIS (FR)
(74) Mandataire: Plasseraud IP

(57) **Abrégé**

L'invention concerne un ensemble (2) ralentisseur électromagnétique (4) et génératrice (8), ledit ensemble (2) comprenant un rotor (10), un induit (32) de ralentisseur porté par le rotor, un inducteur (44) de génératrice porté le rotor, un stator (12) comprenant un manchon (46) présentant une face axiale externe (56) et une face axiale interne (58), un inducteur (66) de ralentisseur disposé sur la face axiale externe (56) du stator et un induit (72) de génératrice agencé sur la face axiale interne (58) du stator et
ledit manchon (46) du stator comporte plusieurs corps (74) en matériau amagnétique agencés entre l'inducteur (66) du ralentisseur et l'induit (72) de la génératrice.

## Description

L'invention concerne un ensemble ralentisseur électromagnétique à courants de Foucault et une génératrice propre à alimenter ce ralentisseur, ainsi qu'un véhicule utilitaire.

Les ralentisseurs électromagnétiques permettent de réduire la vitesse de rotation d'une machine tournante. De tels ralentisseurs sont généralement utilisés comme dispositif de freinage d'appoint ou d'endurance dans des véhicules utilitaires tel que des cars ou des camions. De tels ralentisseurs peuvent également être utilisés dans des téléphériques ou des ascenseurs.

Le document EP 1 014 545 divulgue un ensemble comprenant un ralentisseur électromagnétique et une génératrice propre à alimenter ce ralentisseur électromagnétique. L'ensemble comporte un rotor solidaire d'un arbre de transmission et un stator traversé co-axialement par l'arbre de transmission. La génératrice est propre à générer un courant électrique à partir du mouvement rotatif du rotor par rapport au stator. Le stator comprend une pièce cylindrique solidaire du boîtier d'une boite de vitesse. Le rotor est constitué par deux manchons coaxiaux reliés par un flasque. La pièce cylindrique du stator est agencée entre les deux manchons du rotor et à faible distance de ceux-ci. La face externe de la pièce cylindrique du stator comporte un inducteur propre à générer des courants de Foucault dans le manchon externe du rotor. Ce manchon externe constitue l'induit du ralentisseur. La génératrice comprend un inducteur agencé sur la face externe du manchon interne du rotor et un induit agencé sur la face interne du cylindre du stator.

Toutefois, cet ensemble présente des difficultés de fonctionnement

En effet, les aimants permanents de la génératrice intégrée peuvent se désaimanter en raison des fortes températures du stator. Le stator est échauffé tout d'abord par le rayonnement du rotor lors des phases de freinage, et ensuite par conduction de la chaleur produite par effet Joule dans l'inducteur du ralentisseur et l'induit de la génératrice. Par exemple, la température maximale tolérée pour des aimants au néodyme (dit aimant de type NdfeB) est de 180°C. Lorsque cette température est dépassée, le rendement de la génératrice se voit dégradé très rapidement. En conséquence, les performances de la fonction « ralentisseur » se dégradent elles aussi car elles dépendent directement du rendement de la génératrice.

Le but de la présente invention est de proposer un ensemble ralentisseur et génératrice plus fiable.

A cet effet, la présente invention a pour objet un ensemble ralentisseur électromagnétique et génératrice, ledit ensemble comprenant un rotor, un induit de ralentisseur porté par le rotor, un inducteur de génératrice porté le rotor, un stator comprenant un manchon présentant une face axiale externe et une face axiale interne, un inducteur de ralentisseur disposé sur la face axiale externe du stator et un induit de génératrice agencé sur la face axiale interne du stator, ledit manchon s'étendant autour d'un axe de révolution,
caractérisé en ce que le manchon comporte plusieurs corps en matériau amagnétique agencés entre l'inducteur du ralentisseur et l'induit de la génératrice.

Suivant des modes particuliers de réalisation, l'ensemble comporte l'une ou plusieurs des caractéristiques suivantes :
- lesdit corps amagnétiques sont disposés selon une forme annulaire circulaire coaxiale à l'axe de révolution et s'étendant dans un plan perpendiculaire à l'axe de révolution ;
- chaque corps en matériau amagnétique présente la forme d'un arc de cercle ;
- l'inducteur du ralentisseur comporte des pôles magnétiques saillants radialement vers l'extérieur de la face axiale externe du manchon , et dans lequel chaque corps amagnétique est aligné avec un pôle magnétique selon une direction radiale, lesdites direction radiale étant perpendiculaire à l'axe de révolution ;
- lesdits corps amagnétiques comportent des ouvertures traversantes s'étendant selon une direction parallèle à l'axe de révolution ;
- l'inducteur de la génératrice comporte un bloc porte-aimants et plusieurs aimants permanents agencés à l'intérieur dudit porte-aimants ;
- dans lequel une direction radiale est une direction perpendiculaire à l'axe de révolution et dans lequel lesdits aimants permanents s'étendent avec leur axe Nord-Sud disposé en biais par rapport à une direction radiale ;
- le rotor comporte :
   - une enveloppe cylindrique ayant une face axiale interne agencée en regard de la face axiale externe du stator,
   - une couronne logée à l'intérieur de ladite enveloppe cylindrique, ladite couronne ayant une face axiale externe disposée au droit de la face axiale interne du stator ; l'induit du ralentisseur étant agencé sur la face axiale interne du rotor et l'inducteur de la génératrice étant porté par la face axiale externe de la couronne ;

L'invention a également pour objet un véhicule utilitaire comportant un dispositif d'entrainement, un arbre rotatif entrainé en rotation autour de son axe par ledit dispositif d'entrainement et un ensemble ralentisseur électromagnétique et génératrice tel que décrit ci-dessus.

L'invention sera mieux comprise à la lecture de la description qui va suivre, donnée uniquement à titre d'exemple et faite en se référant aux figures sur lesquelles :
- la figure 1 est une vue une coupe axiale d'un ensemble selon la présente invention ;
- la figure 2 est une vue en coupe radiale de l'ensemble illustré sur la figure 1 ;
- la figure 3 est une vue en coupe axiale d'un rotor selon un premier mode de réalisation de l'invention ;
- la figure 4 est une vue en perspective du rotor illustré sur la figure 3 ;
- la figure 5 est une vue en coupe axiale d'un rotor selon un deuxième mode de réalisation de l'invention ;
- la figure 6 est une vue en perspective du stator de l'ensemble selon l'invention et d'une partie d'un boitier d'une boite de vitesse ou d'un pont ;
- La figure 7 est une vue en coupe radiale d'une partie de l'ensemble illustré sur la figure 1 et d'un système de refroidissement.

Dans la description qui va suivre, les termes, « droite » et « gauche » sont définis lorsque l'ensemble ralentisseur génératrice selon l'invention est disposé comme illustré sur les figures, et ne sont nullement limitatifs.

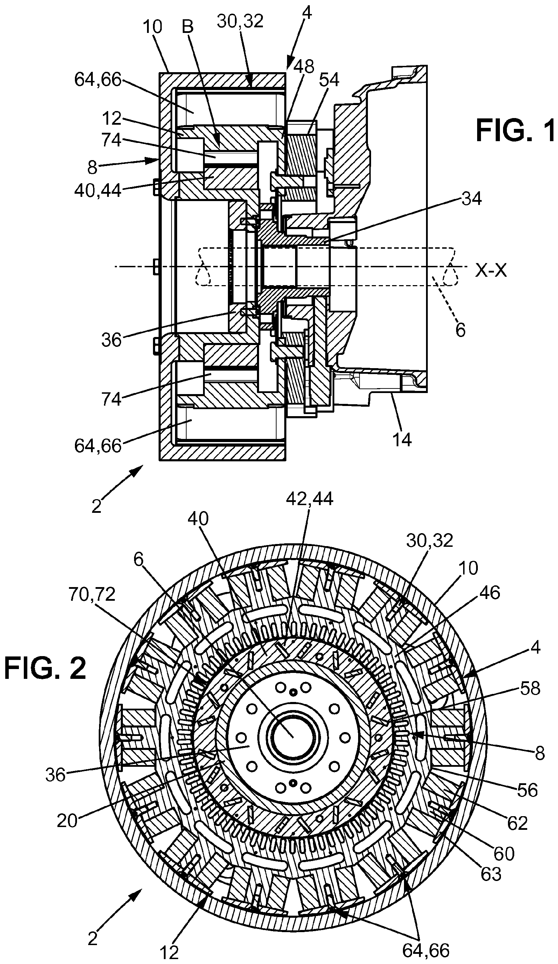

En référence aux figures 1 et 2, l'ensemble 2 ralentisseur électromagnétique et génératrice selon la présente invention comprend un ralentisseur électromagnétique à courant de Foucault 4 propre à freiner la rotation d'un arbre rotatif 6 et une génératrice 8 destinée à alimenter électriquement ce ralentisseur électromagnétique.

Cet ensemble 2 peut être monté sur l'arbre rotatif 6 sortant d'un dispositif d'entrainement d'un véhicule utilitaire tel qu'un car, un camion ou un poids lourd ou d'un moteur d'un ascenseur ou d'un téléphérique.

Cet ensemble 2 comporte un rotor 10 propre à tourner en rotation avec l'arbre rotatif 6 du dispositif d'entrainement et un stator 12 destiné à être fixé à un boîtier 14 de la boîte de vitesse ou du pont de ce dispositif d'entrainement.

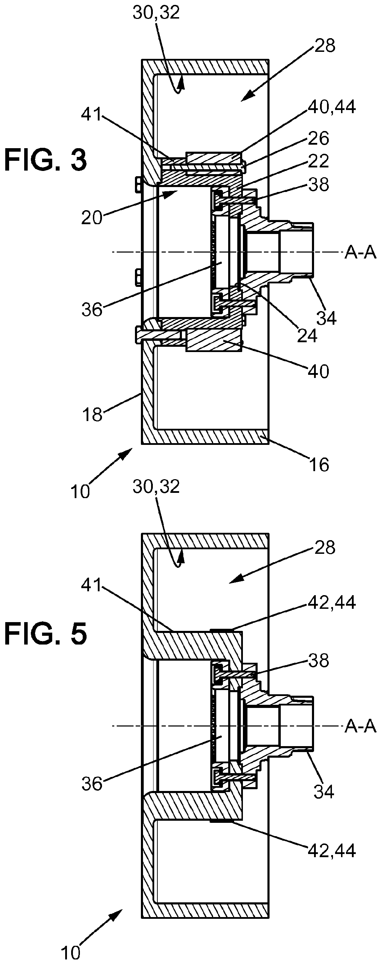

En référence à la figure 3, le rotor 10 comporte une enveloppe cylindrique 16 munie à son extrémité gauche d'un flasque radial 18 s'étendant vers l'intérieur et une couronne 20 pourvue à son extrémité droite d'un rebord radial 22 s'étendant vers l'intérieur et délimitant une ouverture 24.

L'extrémité gauche de la couronne 20 est fixée au flasque radial 18, par des vis 26 de sorte que la couronne 20 s'étend à l'intérieur de l'enveloppe cylindrique 16. L'enveloppe cylindrique 16, le flasque radial 18 et la couronne 20 forment un logement annulaire 28 ayant une face radiale ouverte en direction du boîtier 14.

L'enveloppe cylindrique 16 et la couronne 20 sont circulaires et ont le même axe de révolution A-A. L'ouverture 24 est également centrée sur cet axe de révolution A-A. Cet axe de révolution A-A est confondu avec l'axe de rotation X-X de l'arbre rotatif 6 du dispositif d'entrainement lorsque l'ensemble ralentisseur génératrice 2 est monté sur le dispositif d'entrainement.

L'enveloppe cylindrique 16 comprend une face axiale interne 30 qui constitue l'induit 32 du ralentisseur 4.

Le rotor 10 comporte en outre une bride de transmission 34 destiné à porter l'arbre rotatif 6 du dispositif d'entrainement et un une pièce intercalaire 36 de forme annulaire propre à solidariser en rotation le rotor 10 à l'arbre rotatif 6. A cet effet, la pièce intercalaire 36 est munie de rainures propres à s'engager dans des rainures complémentaires de l'arbre rotatif 6 de manière à solidariser le rotor 10 à l'arbre rotatif 6.

La bride de transmission 34 est fixée contre la face droite du rebord radial 22 et la pièce intercalaire 36 est fixée contre la face gauche du rebord radial 22 par des vis 38.

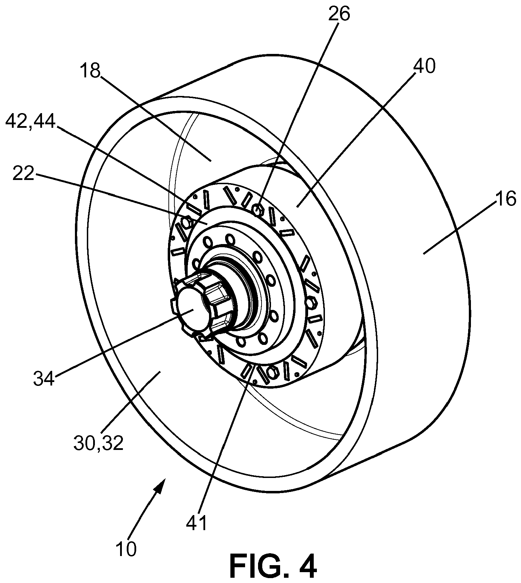

En référence à la figure 4, le rotor 10 comporte en outre un bloc porte-aimants 40 fixé, par exemple par des vis 26, sur la face axiale externe 41 de la couronne 20. Ce bloc porte-aimants 40 comporte des aimants permanents 42 enterrés à l'intérieur du bloc. Le bloc porte-aimants 40 est réalisé en tôle feuilleté, en tôle laminée ou en matériau fritté. Les aimants permanents 42 sont positionnés avec leur axe Nord-Sud en biais par rapport à une direction radiale. En particulier, les aimants permanents 42 sont agencés par paire. Chaque paire d'aimants est disposée selon un motif en V ouvert en direction de l'enveloppe cylindrique 16.

En variante, les paires d'aimants permanents 42 sont disposés selon un motif en V fermé en direction de l'enveloppe cylindrique 16.

Selon une autre variante, les aimants permanents 42 sont disposés à plat sur la face axiale externe 41 de la couronne 20.

Ces aimants permanents 42 constituent l'inducteur 44 de la génératrice 8.

Comme les aimants permanents 42 sont enterrés, ils sont moins influencés par le champ magnétique généré par l'inducteur du ralentisseur.

En variante, les aimants permanents 42 sont fixés directement sur la face axiale externe 41 de la couronne 20, par exemple par collage.

Selon une variante représentée sur la figure 5, l'enveloppe cylindrique 16 et la couronne 20 sont formées d'une seule pièce. Dans ce mode de réalisation, les aimants permanents 42 sont fixés directement sur la face axiale externe 41 de la couronne.

En référence aux figures 1, 2 et 6, le stator 12 comporte un manchon 46 de section circulaire et un fond radial 48 percé d'une ouverture centrale 50.

Lorsque l'ensemble 2 est assemblé, le manchon 46 s'étendant autour du même axe de révolution A-A que l'enveloppe cylindrique 16 et la couronne 20.

Le fond radial 48 est fixé au moyen de vis 52 à un support de stator 54. Le support de stator 54 est lui-même fixé au boîtier 14 de la boite de vitesse ou du pont, comme visible sur la figure 1.

Le manchon 46 est agencé dans le logement 28 formé par l'enveloppe cylindrique 16 et la couronne 20 du rotor.

Le manchon 46 présente une face axiale externe 56 disposée en regard de la face axiale interne 30 de l'enveloppe cylindrique et une face axiale interne 58 disposée en regard et à faible distance du bloc porte-aimants 40 du stator.

La face axiale externe 56 est pourvue de pôles s'étendant vers l'extérieur de la face axiale externe. Ces pôles 60 sont entourés de fils électriques conducteurs 62. Des épanouissements 63 de flux magnétique décrit dans le brevet FR 2 757705 délivré au nom de la société Telma sont fixés par des vis sur les extrémités libres des saillies radiales 60. Les saillies radiales 60, leurs bobinages respectifs 62 et les épanouissements 63 forment des pôles magnétiques 64 multiples à polarités alternées. L'ensemble des pôles magnétiques 64 agencés circulairement constituent l'inducteur 66 du ralentisseur.

La face axiale interne 58 est munie de saignées radiales 68 formant des noyaux. Ces noyaux sont entourés de fils électriques conducteurs non représentés sur les figures. Les noyaux et leurs bobinages de fils électriques constituent des pôles magnétiques 70 multiples Triphasés. L'ensemble des pôles magnétiques 70 forme l'induit 72 de la génératrice.

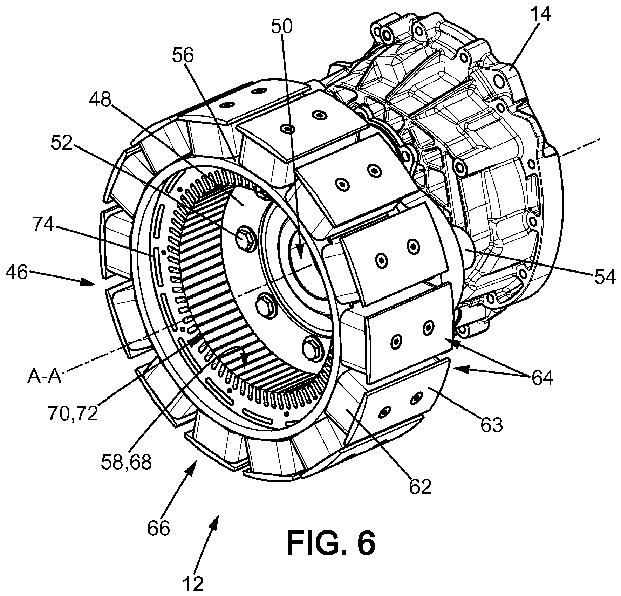

En référence aux figures 2 et 6, le manchon 46 comporte plusieurs corps 74 en matériau amagnétique agencés entre la face axiale externe 56 et la face axiale interne 58 du manchon.

En particulier, les corps 74 en matériau amagnétique sont situés entre l'inducteur 66 du ralentisseur et l'induit 72 de la génératrice. Les corps amagnétique 74 sont disposés selon une forme annulaire circulaire coaxiale à l'axe de révolution A-A. Les corps amagnétique 74 s'étendent dans un plan radial (c'est-à-dire dans un plan perpendiculaire à l'axe de révolution A-A).

Ces corps 74 en matériau amagnétique forment une barrière magnétique entre les lignes de champs magnétiques générées entre l'induit 32 et l'inducteur 66 du ralentisseur et d'autre part les lignes de champs magnétiques générées entre l'induit 72 et l'inducteur 44 de la génératrice.

Selon le mode de réalisation représenté, le stator comporte un nombre de corps amagnétique 74 égal au nombre de pôles magnétiques 64 de l'inducteur 66 du ralentisseur et chaque corps amagnétique 74 est aligné avec un pôle magnétique 66 selon une direction radiale.

Selon le mode de réalisation représenté, chaque corps amagnétique 74 présente la forme d'un arc de cercle.

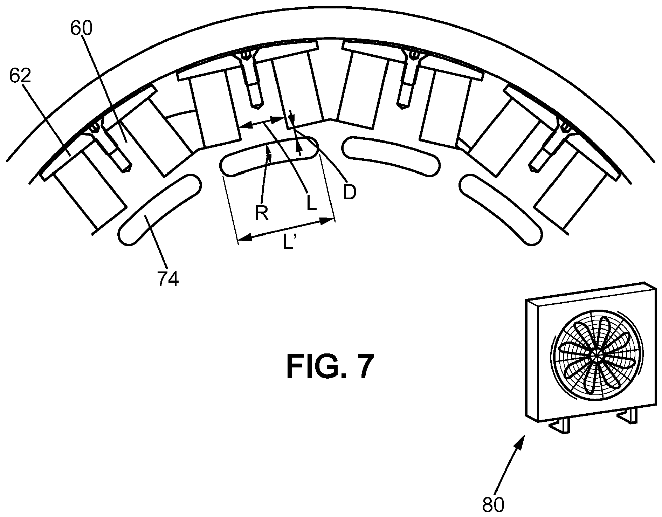

En référence à la figure 7, si l'on considère qu'un pôle 60 présente une largeur L dans un plan radial, le corps amagnétique 74 peut par exemple présenter une largeur L', avec L' supérieur à 130 % de la largeur L. De même, la hauteur h du corps amagnétique peut avantageusement être comprise entre L/4 et L/3. De préférence, la distance D entre le corps amagnétique 74 et la face axiale externe 56 du manchon est au minimum égale à L/2.

De même, si le le pôle s'étend sur un arc de cercle d'angle a, le corps amagnétique s'étend sur un arc de cercle supérieur à 130% de α.

Les corps amagnétiques peuvent comprendre des trous traversants ou être entièrement formés par des trous traversants. Les trous traversants s'étendent selon une direction parallèle à l'axe de révolution A-A. Avantageusement, ces trous traversants permettent simultanément de refroidir le stator. En particulier, ces trous traversants permettent de refroidir le manchon 46, les pôles 60, les bobinages 62, les pôles magnétiques 70 et l'induit 72.

L'ensemble 2 ralentisseur électromagnétique et génératrice peut comporter un ventilateur 80 propre accélérer la vitesse d'un flux d'air. Le stator est ainsi refroidi par un flux d'air forcé.

En variante, l'ensemble 2 ralentisseur électromagnétique et génératrice comporte un circuit de refroidissement propre à faire circuler un liquide de refroidissement au travers des trous traversants. Le circuit de refroidissement comporte une pompe et des conduites contenant un liquide de refroidissement.

En variante, le refroidissement peut être réalisé par un flux d'air non pulsé.

En variante, les corps amagnétiques sont réalisés en aluminium, en caoutchouc, en inox amagnétique, en fonte, en magnésium, fibre de carbone, poudre frittée etc. Dans ce cas, le stator est réalisé en réalisé en tôle feuilleté, en tôle laminée ou en matériau fritté.

En variante, le manchon comporte un unique corps amagnétique formant une rainure circulaire non traversante coaxiale à l'axe de révolution A-A. Cette rainure s'étend dans un plan radial c'est-à-dire dans un plan perpendiculaire à l'axe de révolution A-A. Cette rainure peut être vide ou remplie d'aluminium de caoutchouc etc.

En fonctionnement, la rotation du rotor 10 par rapport au stator 12 génère un courant dans les fils électriques conducteurs des pôles magnétiques 70 de l'induit de la génératrice. Ce courant est redressé par un redresseur non représenté. Lorsque le conducteur du véhicule actionne le ralentisseur électromagnétique 4, l'électricité sortant du redresseur alimente les bobinages 62 des pôles magnétiques 64 de l'inducteur du ralentisseur électromagnétique 4. Les champs magnétiques crées par l'induit du ralentisseur génère des courants de Foucault sur la face interne de l'enveloppe cylindrique 16. Ces courants de Foulcault permettent de ralentir le rotor par rapport au stator.

L'invention concerne également un véhicule utilitaire comportant un dispositif d'entrainement, un arbre rotatif 6 entrainé en rotation autour de son axe par ledit dispositif d'entrainement et un ensemble 2 ralentisseur électromagnétique et génératrice, tel que décrit ci-dessus.

## Revendications

1. Ensemble (2) ralentisseur électromagnétique (4) et génératrice (8), ledit ensemble (2) comprenant un rotor (10), un induit (32) de ralentisseur porté par le rotor (10), un inducteur (44) de génératrice porté le rotor (10), un stator (12) comprenant un manchon (46) présentant une face axiale externe (56) et une face axiale interne (58), un inducteur (66) de ralentisseur disposé sur la face axiale externe (56) du stator et un induit (72) de génératrice agencé sur la face axiale interne (58) du stator, ledit manchon (46) s'étendant autour d'un axe de révolution (A-A),
**caractérisé en ce que** le manchon (46) comporte plusieurs corps (74) en matériau amagnétique agencés entre l'inducteur (66) du ralentisseur et l'induit (72) de la génératrice.

2. Ensemble (2) selon la revendication 1, dans lequel lesdits corps amagnétiques (74) sont disposés selon une forme annulaire circulaire coaxiale à l'axe de révolution (A-A) et s'étend dans un plan perpendiculaire à l'axe de révolution (A-A).

3. Ensemble (2) selon l'une quelconque revendications 1 et 2, dans lequel chaque corps (74) en matériau amagnétique présente la forme d'un arc de cercle.

4. Ensemble (2) selon l'une quelconque des revendications 1 à 3, dans lequel l'inducteur (66) du ralentisseur comporte des pôles magnétiques (64) saillants radialement vers l'extérieur de la face axiale externe (56) du manchon , et dans lequel chaque corps amagnétique (74) est aligné avec un pôle magnétique (64) selon une direction radiale, lesdites direction radiale étant perpendiculaire à l'axe de révolution (A-A).

5. Ensemble (2) selon l'une quelconque des revendications 1 à 4, dans lequel lesdits corps amagnétiques (74) comportent des ouvertures traversantes s'étendant selon une direction parallèle à l'axe de révolution (A-A).

6. Ensemble (2) selon l'une quelconque des revendications 1 à 5, dans lequel l'inducteur (44) de la génératrice comporte un bloc porte-aimants (40) et plusieurs aimants permanents (42) agencés à l'intérieur dudit porte-aimants (40).

7. Ensemble (2) selon la revendication 7, dans lequel une direction radiale est une direction perpendiculaire à l'axe de révolution (A-A) et dans lequel lesdits aimants permanents (42) s'étendent avec leur axe Nord-Sud disposé en biais par rapport à une direction radiale.

8. Ensemble (2) selon l'une quelconque des revendications 5 à 7, qui comporte un dispositif de ventilation (80) propre à pulser de l'air au travers des ouvertures traversantes.

9. Ensemble (2) selon l'une quelconque des revendications 5 à 7, qui comporte un circuit de refroidissement propre à faire circuler un liquide de refroidissement au travers des trous traversants.

10. Ensemble (2) selon l'une quelconque des revendications 1 à 9, dans lequel le rotor (10) comporte :
- une enveloppe cylindrique (16) ayant une face axiale interne (30) agencée en regard de la face axiale externe(56) du stator (12),
- une couronne (20) logée à l'intérieur de ladite enveloppe cylindrique (16), ladite couronne (20) ayant une face axiale externe (41) disposée au droit de la face axiale interne (58) du stator (12) ; l'induit (32) du ralentisseur (4) étant agencé sur la face axiale interne (30) du rotor (10) et l'inducteur (44) de la génératrice (8) étant porté par la face axiale externe (41) de la couronne (16).

11. Véhicule utilitaire comportant un dispositif d'entrainement, un arbre rotatif (6) entrainé en rotation autour de son axe par ledit dispositif d'entrainement et un ensemble (2) ralentisseur électromagnétique et génératrice selon l'une quelconque des revendications 1 à 10.
